(19) **Europäisches Patentamt / European Patent Office / Office européen des brevets**

(11) **EP 4 439 760 A1**

(12) # EUROPEAN PATENT APPLICATION
published in accordance with Art. 153(4) EPC

(43) Date of publication:
**02.10.2024 Bulletin 2024/40**

(21) Application number: **22895614.0**

(22) Date of filing: **16.11.2022**

(51) International Patent Classification (IPC):
$H01M\ 10/0525$ (2010.01)   $H01G\ 11/06$ (2013.01)
$H01G\ 11/24$ (2013.01)   $H01G\ 11/46$ (2013.01)
$H01M\ 4/505$ (2010.01)   $H01M\ 4/525$ (2010.01)
$H01M\ 4/587$ (2010.01)

(52) Cooperative Patent Classification (CPC):
H01G 11/06; H01G 11/24; H01G 11/46;
H01M 4/505; H01M 4/525; H01M 4/587;
H01M 10/0525; Y02E 60/10

(86) International application number:
**PCT/JP2022/042462**

(87) International publication number:
**WO 2023/090333 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.11.2021 JP 2021189508**

(71) Applicant: **GS Yuasa International Ltd.**
**Kisshoin, Minami-ku,**
**Kyoto-shi, Kyoto 601-8520 (JP)**

(72) Inventors:
• **UEHIRA Kenta**
**Kyoto-shi, Kyoto 601-8520 (JP)**

• **YAMAKAWA Yuto**
**Kyoto-shi, Kyoto 601-8520 (JP)**
• **NAKAI Kenta**
**Kyoto-shi, Kyoto 601-8520 (JP)**
• **KANEKO Takashi**
**Kyoto-shi, Kyoto 601-8520 (JP)**
• **SEKIGUCHI Taisei**
**Kyoto-shi, Kyoto 601-8520 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **NONAQUEOUS ELECTROLYTE POWER STORAGE ELEMENT**

(57) A nonaqueous electrolyte energy storage device according to one aspect of the present invention includes: a positive electrode including a lithium transition metal composite oxide containing a nickel element and a manganese element; and a negative electrode including solid graphite, the solid graphite has a porosity of 2% or less, and the content of the nickel element with respect to the transition metal element in the lithium transition metal composite oxide is 40 mol% or more.

Fig. 1

**Description**

TECHNICAL FIELD

The present invention relates to a nonaqueous electrolyte energy storage device.

BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. In addition, capacitors such as lithium ion capacitors and electric double-layer capacitors are also widely in use as nonaqueous electrolyte energy storage devices other than the nonaqueous electrolyte secondary batteries.

Heretofore, lithium transition metal composite oxides that have an $\alpha$-NaFeO$_2$-type crystal structure have been examined as positive active materials for nonaqueous electrolyte energy storage devices, and nonaqueous electrolyte secondary batteries in which LiCoO$_2$ is used have been widely put to practical use. LiCoO$_2$ is, however, expensive to manufacture, and difficult to stably supply. Then, positive active materials containing a nickel element and a manganese element as transition metal elements, such as L$_1$Ni$_{1/3}$Co$_{1/3}$Mn$_{1/3}$O$_2$, have been developed and put to practical use (see Patent Document 1). On the other hand, for negative active materials, carbon materials such as graphite have been widely used (see Patent Document 2).

PRIOR ART DOCUMENTS

PATENT DOCUMENTS

Patent Document 1: JP-A-2015-18678
Patent Document 2: JP-A-2005-222933

SUMMARY OF THE INVENTION

PROBLEMS TO BE SOLVED BY THE INVENTION

Nonaqueous electrolyte energy storage devices are desirably low in initial resistance. In addition, the nonaqueous electrolyte energy storage devices have resistances increased due to repeated charge-discharge, and improvements therefor are thus required.

An object of the present invention is to provide a nonaqueous electrolyte energy storage device that has a low initial resistance and a suppressed increase in resistance after a charge-discharge cycle.

MEANS FOR SOLVING THE PROBLEMS

A nonaqueous electrolyte energy storage device according to one aspect of the present invention includes: a positive electrode including a lithium transition metal composite oxide containing a nickel element and a manganese element; and a negative electrode including solid graphite, the solid graphite has a porosity of 2% or less, and the content of the nickel element with respect to the transition metal element in the lithium transition metal composite oxide is 40 mol% or more.

A nonaqueous electrolyte energy storage device according to another aspect of the present invention includes: a positive electrode including a lithium transition metal composite oxide containing a nickel element and a manganese element; and a negative electrode including solid graphite, the solid graphite has a porosity of 2% or less, and the content of the manganese element with respect to the transition metal element in the lithium transition metal composite oxide is 30 mol% or less.

ADVANTAGES OF THE INVENTION

According to one aspect of the present invention, it is possible to provide a nonaqueous electrolyte energy storage device that has a low initial resistance and a suppressed increase in resistance after a charge-discharge cycle.

BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus including a plurality of nonaqueous electrolyte energy storage devices.

MODE FOR CARRYING OUT THE INVENTION

First, an outline of a nonaqueous electrolyte energy storage device disclosed in the present specification will be described.
[1]: A nonaqueous electrolyte energy storage device (A) according to one aspect of the present invention includes: a positive electrode including a lithium transition metal composite oxide containing a nickel element and a manganese element; and a negative electrode including solid graphite, the solid graphite has a porosity of 2% or less, and the content of the nickel element with respect to the transition metal element in the lithium transition metal composite oxide is 40 mol% or more.

The nonaqueous electrolyte energy storage device (A) according to [1] has a low initial resistance and has a suppressed increase in resistance after a charge-discharge cycle. The reasons therefor are not clear, but the following reasons are presumed. The lithium transition metal composite oxide (a) containing a nickel element and a manganese element, with the content of the nickel element with respect to the transition metal element being 40 mol% or more, has high electron conductivity, and the nonaqueous electrolyte energy storage device (A) containing such a lithium transition metal composite oxide (a) in a positive electrode has a low initial resistance. The lithium transition metal composite oxide (a) in which the content of the nickel element is high is, however, likely to cause particle cracks associated with charge-discharge cycles, and is likely to cause the resistance after charge-discharge cycles to be increased by decreased electrical contact between particles. In contrast, the solid graphite with a porosity of 2% or less has a smaller change in volume due to expansion and shrinkage in charge-discharge than hollow graphite with a porosity more than 2%. Thus, in the case of the combination of the positive electrode including the lithium transition metal composite oxide (a) and the negative electrode including the solid graphite, compression on the positive electrode due to expansion of the negative electrode is considered suppressed, thereby making the lithium transition metal composite oxide (a) less likely to cause particle cracks. For these reasons, in the nonaqueous electrolyte energy storage device (A) according to [1] mentioned above, the initial resistance is presumed to be low, and an increase in resistance after a charge-discharge cycle is presumed to be suppressed.
The term "solid" of the solid graphite means that the inside of the particle of the graphite is filled substantially without voids. More specifically, being "solid" means that in a cross section of a particle observed in a SEM image acquired with the use of a scanning electron microscope (SEM), the void area ratio (porosity) in the particle to the area of the whole particle is 2% or less.
"The void area ratio (porosity) in the particle to the area of the whole particle" in the graphite particles can be determined by the following procedure.

(1) Preparation of sample for measurement

The negative electrode to be measured is fixed with a thermosetting resin. A cross section polisher is used to expose a cross section of the negative electrode fixed with the resin to prepare a sample for measurement. It is to be noted that the negative electrode to be measured are prepared in accordance with the following procedure. When the negative electrode before assembling the nonaqueous electrolyte energy storage device can be prepared, the negative electrode is used as it is. In the case of preparing from the assembled nonaqueous electrolyte energy storage device, first, the nonaqueous electrolyte energy storage device is subjected to constant current discharge at a current of 0.1C to an end-of-discharge voltage under normal usage, into a discharged state. The nonaqueous electrolyte energy storage device in the discharged state is disassembled, the negative electrode is taken out, components (the electrolyte and the like) are then sufficiently washed with a dimethyl carbonate, and then dried under reduced pressure at room temperature for 24 hours. The operations from the disassembly of the nonaqueous electrolyte energy storage device to the preparation of the negative electrode to be measured are performed in a dry air atmosphere with a dew point of - 40°C or lower. The term "under normal usage" herein means use of the nonaqueous electrolyte energy storage device while employing charge-discharge conditions recommended or specified in the nonaqueous electrolyte energy storage device, and when a charger for the nonaqueous electrolyte energy storage device is prepared, this term means use of the nonaqueous electrolyte energy storage device by applying the charger.

(2) Acquisition of SEM image

For acquiring an SEM image, JSM-7001F (manufactured by JEOL Ltd.) is used as a scanning electron microscope. For the SEM image, a secondary electron image is observed. The acceleration voltage is 15 kV. The observation magnification is set such that the number of graphite particles appearing in one field of view is three or more and fifteen or less. The obtained SEM image is stored as an image file. In addition, various conditions such as a spot diameter, a working distance, an irradiation current, luminance, and a focus are appropriately set so as to make the contours of the graphite particles clear.

(3) Cut-out of contour of graphite particle

The contour of the graphite particle is cut out from the acquired SEM image by using an image cutting function of image editing software Adobe Photoshop Elements 11. The contour is cut out by using a quick selection tool to select the outside of the contour of the graphite particle and edit the part excluding the graphite particle to a black background. In this regard, when the number of graphite particles from which the contours have been able to be cut out is less than three, an SEM image is acquired again, and the cut-out is performed until the number of graphite particles from which the contours have been able to be cut out is three or more.

(4) Binarization processing

The image of the first graphite particle among the cut-out graphite particles is subjected to binarization processing with, as a threshold value, a concentration set to be 20% lower than the concentration at which the intensity reaches the maximum, with the use of image analysis software PopImaging 6.00. By the binarization processing, the area on the higher-concentration side is calculated as an "area S 1 of voids in the particle".

Then, the image of the same first graphite particle is subjected to binarization processing with a concentration of 10% as a threshold value. The outer edge of the graphite particle is determined by the binarization processing, and the area inside the outer edge is calculated as an "area S0 of the whole particle".

The ratio (S 1/S0) of S1 to S0 is calculated with the use of S1 and S0 calculated above to calculate an "area ratio R1 of voids in the particle to the area of the whole particle" in the first graphite particle.

The images of the second and subsequent graphite particles among the cut-out graphite particles are also each subjected to the binarization processing mentioned above, and the areas S 1 and S0 are calculated. Based on the calculated area S 1 and area S0, void area ratios R2, R3,... of the respective graphite particles are calculated.

(5) Determination of void area ratio

The average value for all of the void area ratios R1, R2, R3,... calculated by the binarization processing is calculated to determine "the area ratio (porosity) of the voids in the particles to the total area of the particles".

It is to be noted that, instead of the scanning electron microscope used for "acquisition of SEM image", the image editing software used for "cut-out of contour of graphite particle", and the image analysis software used for the "binarization processing", apparatuses, software, and the like capable of the corresponding measurement, image editing, and image analysis may be used.

The term "graphite" refers to a carbon material in which the average lattice spacing ($d_{002}$) of the (002) plane determined by an X-ray diffraction method before charge-discharge or in a discharged state is 0.33 nm or more and less than 0.34 nm. In this regard, the "discharged state" of the carbon material means a state discharged such that lithium ions that can be occluded and released in association with charge-discharge are sufficiently released from the carbon material that is a negative active material. For example, the "discharged state" refers to a state where the open circuit voltage is 0.7 V or higher in a half cell that has, for use as a working electrode, a negative electrode containing a carbon material as a negative active material, and has metal Li for use as a counter electrode.

[2]: In the nonaqueous electrolyte energy storage device (A) according to [1], the content of the manganese element with respect to the transition metal element in the lithium transition metal composite oxide (a) is preferably 30 mol% or less. The nonaqueous electrolyte energy storage device according to [2] has a lower initial resistance.

[3]: A nonaqueous electrolyte energy storage device (B) according to another aspect of the present invention includes: a positive electrode including a lithium transition metal composite oxide containing a nickel element and a manganese element; and a negative electrode including solid graphite, the solid graphite has a porosity of 2% or less, and the content of the manganese element with respect to the transition metal element in the lithium transition metal composite oxide is 30 mol% or less.

The nonaqueous electrolyte energy storage device (B) according to [3] has a low initial resistance and has a suppressed increase in resistance after a charge-discharge cycle. The reasons therefor are not clear, but the following reasons are presumed. The lithium transition metal composite oxide (b) containing a nickel element and a manganese element, with the content of the manganese element with respect to the transition metal element being 30 mol% or less, is, similarly to the lithium transition metal composite oxide (a) mentioned above, also allows the initial resistance to be reduced, but is likely to cause particle cracks associated with charge-discharge cycles. Thus, in the case of the combination of the positive electrode including the lithium transition metal composite oxide (b) and the negative electrode including the solid graphite with a smaller change in volume due to expansion and shrinkage in charge-discharge, compression on the positive electrode due to expansion of the negative electrode is considered suppressed, thereby making the lithium transition metal composite oxide (b) less likely to cause particle cracks. For these reasons, in the nonaqueous electrolyte energy storage device (B) according to [3] mentioned above, the initial resistance is presumed to be low, and an increase in resistance after a charge-discharge cycle is presumed to be suppressed.

[4]: In the nonaqueous electrolyte energy storage device (A) and the nonaqueous electrolyte energy storage device (B) according to any one of [1] to [3], preferably, the negative electrode further includes a binder, and the solid graphite has an average particle size of 4 pm or more. In the case of using the solid graphite with an average particle size of 4 pm or more, the number of points of contact between the solid graphite can be reduced as compared with the case of using solid graphite with an average particle size less than the above-mentioned lower limit, thus allowing the amount of binder required for maintaining the contact between particles of the solid graphite to be reduced. More specifically, even when the content of the binder in the negative electrode is relatively low, the contact property between the solid graphite particles is enhanced. Accordingly, the nonaqueous electrolyte energy storage device according to [4] mentioned above, including such a negative electrode, has a tendency to have a further suppressed increase in resistance after a charge-discharge cycle, because the solid graphite particles sufficiently in contact with each other is maintained even in repeated charge-discharge. Furthermore, not only the contact between the particles of the solid graphite in the negative electrode is enhanced, but also the contact between the negative substrate and the solid graphite is enhanced, and thus, the device also advantages such as making the solid graphite less likely to be extracted from the negative electrode in the manufacturing process and the like, and being high in productivity.

The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013). It is to be noted that when solid graphite before preparation of the negative electrode can be prepared for the solid graphite to be measured, the solid graphite is directly subjected to the measurement. In the case of preparing from the assembled nonaqueous electrolyte energy storage device, a step of collecting the solid graphite from the negative electrode in a discharged state in accordance with the procedure of measuring the above-mentioned "void area ratio (porosity) in the particle to the area of the whole particle" and immersing the solid graphite in a dimethyl carbonate for 5 minutes is repeated twice to sufficiently remove the nonaqueous electrolyte, and the solid graphite dried under reduced pressure at room temperature for 24 hours is subjected to the measurement.

[5]: In the nonaqueous electrolyte energy storage device (A) and the nonaqueous electrolyte energy storage device (B) according to any one of [1] to [4], the solid graphite preferably has an average particle size of 7 pm or more. In the nonaqueous electrolyte energy storage device according to [5], including such a negative electrode, the above-described effects can be more efficiently produced.

A nonaqueous electrolyte energy storage device according to an embodiment of the present invention, an energy storage apparatus, and a method for manufacturing the nonaqueous electrolyte energy storage device, and other embodiments will be described in detail. It is to be noted that the names of the respective constituent members (respective constituent elements) for use in the respective embodiments may be different from the names of the respective constituent members (respective constituent elements) for use in the background art.

<Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with separators interposed therebetween, or a wound type obtained by winding a positive electrode and a negative electrode stacked with a separator interposed therebetween.

The nonaqueous electrolyte is present to be contained in the positive electrode, the negative electrode, and the separator. A nonaqueous electrolyte secondary battery (hereinafter, also referred to simply as a "secondary battery") will be described as an example of the nonaqueous electrolyte energy storage device.

(Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of $10^7$ Q cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, particularly preferably 10 pm or more and 25 pm or less. When the average thickness of the positive substrate falls within the range mentioned above, the energy density per volume of the secondary battery can be increased while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer includes optional components such as a conductive agent, a binder (binding agent), a thickener, and a filler, if necessary.

The positive active material includes a lithium transition metal composite oxide. The lithium transition metal composite oxide preferably has a layered $\alpha$-NaFeO$_2$-type crystal structure.

In an embodiment of the present invention, as the lithium transition metal composite oxide, a lithium transition metal composite oxide (a) containing a nickel element and a manganese element can be used in which the content of the nickel element with respect to the transition metal element is 40 mol% or more. The content of the nickel element with respect to the transition metal element in the lithium transition metal composite oxide (a) is preferably 45 mol% or more, more preferably 50 mol% or more. The content of the nickel element is set to be equal to or more than the above-mentioned lower limit, thereby allowing, for example, the initial resistance of the nonaqueous electrolyte energy storage device to be reduced. On the other hand, the content of the nickel element with respect to the transition metal element in the lithium transition metal composite oxide (a) is preferably 70 mol% or less, more preferably 60 mol% or less, still more preferably less than 60 mol%, and is even more preferably 55 mol% or less in some cases. The content of the nickel element is set to be equal to or less than the above-mentioned upper limit, thereby allowing, for example, the resistance of the nonaqueous electrolyte energy storage device to be further kept from being increased after a charge-discharge cycle. The content of the nickel element with respect to the transition metal element in the lithium transition metal composite oxide (a) can be set to be equal to or more than any one of the above-mentioned lower limits and equal to or less than any one of the above-mentioned upper limits.

The content of the manganese element with respect to the transition metal element in the lithium transition metal composite oxide (a) is preferably 5 mol% or more and 30 mol% or less, more preferably 10 mol% or more and 25 mol% or less, still more preferably 15 mol% or more and 20 mol% or less. The content of the manganese element falls within the range mentioned above, thereby allowing, for example, the initial resistance of the nonaqueous electrolyte energy storage device to be further reduced. In a preferred aspect, the content $C_{Ni}$ of the nickel element with respect to the transition metal element in the lithium transition metal composite oxide (a) is higher than the content $C_{Mn}$ of the manganese element. This can more suitably keep the resistance of the nonaqueous electrolyte energy storage device from being increased after a charge-discharge cycle. For example, the relationship between $C_{Ni}$ and $C_{Mn}$ preferably satisfies $1.0 < C_{Ni}/C_{Mn} \leq 3.5$, more preferably satisfies $1.2 \leq C_{Ni}/C_{Mn} < 3.0$, still more preferably satisfies $1.5 \leq C_{Ni}/C_{Mn} <\_ 2.5$. $C_{Ni}$ is preferably higher than $C_{Mn}$ by 20 mol% or more. In addition, the value obtained by subtracting $C_{Mn}$ from $C_{Ni}$ is preferably 35 mol% or less, more preferably 30 mol% or less, still more preferably 25 mol% or less.

The lithium transition metal composite oxide (a) preferably further contains a cobalt element. The content of the cobalt element with respect to the transition metal element in the lithium transition metal composite oxide (a) is preferably 1 mol% or more and 30 mol% or less, more preferably 5 mol% or more and 25 mol% or less, still more preferably 10 mol% or more and 20 mol% or less. The content of the cobalt element falls within the range mentioned above, thereby allowing, for example, the initial resistance of the nonaqueous electrolyte energy storage device to be further reduced. In a preferred aspect, the content $C_{Ni}$ of the nickel element with respect to the transition metal element in the lithium transition metal composite oxide (a) is higher than the content $C_{Co}$ of the cobalt element. This can more suitably keep the resistance of the nonaqueous electrolyte energy storage device from being increased after a charge-discharge cycle. For example, the relationship between $C_{Ni}$ and $C_{Co}$ preferably satisfies $1.0 < C_{Ni}/C_{Co} \leq 2.0$, more preferably satisfies $1.0 < C_{Ni}/C_{Co} \leq 1.5$, still more preferably satisfies $1.1 \leq C_{Ni}/C_{Co} \leq 1.3$. $C_{Ni}$ is preferably higher than $C_{Co}$ by 5 mol% or more. In addition, the value obtained by subtracting $C_{Co}$ from $C_{Ni}$ is preferably 30 mol% or less, more preferably 20 mol% or less (for example, 12 mol% or less, typically 10 mol% or less).

The lithium transition metal composite oxide (a) may further contain a typical metal element (for example, an aluminum element or the like), except for the transition metal elements excluding the nickel element, the manganese element, and the cobalt element, and the lithium element. The total content of the nickel element, manganese element, and cobalt element with respect to the transition metal element in the lithium transition metal composite oxide (a) is, however, preferably 90 mol% or more, more preferably 99 mol% or more, and may be 100 mol%. In addition, the total content of the nickel element, manganese element, and cobalt element with respect to the metal elements excluding the lithium element in the lithium transition metal composite oxide (a) is preferably 90 mol% or more, more preferably 99 mol% or more, and may be 100 mol%.

In an embodiment of the present invention, as the lithium transition metal composite oxide, a lithium transition metal composite oxide (b) containing a nickel element and a manganese element can be used in which the content of the manganese element with respect to the transition metal element is 30 mol% or less. The content of the manganese element with respect to the transition metal element in the lithium transition metal composite oxide (b) is preferably 25 mol% or less, more preferably 20 mol% or less. The content of the manganese element is set to be equal to or less than the above-mentioned upper limit, thereby allowing, for example, the initial resistance of the nonaqueous electrolyte energy storage device to be reduced. On the other hand, the content of the manganese element with respect to the transition metal element in the lithium transition metal composite oxide (b) is preferably 5 mol% or more, more preferably 10 mol% or more, still more preferably 15 mol% or more. The content of the manganese element with respect to the transition metal element in the lithium transition metal composite oxide (b) can be set to be equal to or more than any one of the above-mentioned lower limits and equal to or less than any one of the above-mentioned upper limits.

The content of the nickel element with respect to the transition metal element in the lithium transition metal composite oxide (b) is preferably 40 mol% or more and 70 mol% or less, more preferably 45 mol% or more and 60 mol% or less, still more preferably 50 mol% or more and less than 60 mol%, and is even more preferably 55 mol% or less in some cases. The content of the nickel element falls within the range mentioned above, thereby allowing, for example, the initial resistance of the nonaqueous electrolyte energy storage device to be further reduced, and the resistance to be further kept from being increased after a charge-discharge cycle. In a preferred aspect, the content $C_{Ni}$ of the nickel element with respect to the transition metal element in the lithium transition metal composite oxide (b) is higher than the content $C_{Mn}$ of the manganese element. This can more suitably keep the resistance of the nonaqueous electrolyte energy storage device from being increased after a charge-discharge cycle. For example, the relationship between $C_{Ni}$ and $C_{Mn}$ preferably satisfies $1.0 < C_{Ni}/C_{Mn} \leq 3.5$, more preferably satisfies $1.2 \leq C_{Ni}/C_{Mn} < 3.0$, still more preferably satisfies $1.5 \leq C_{Ni}/C_{Mn} \leq 2.5$. $C_{Ni}$ is preferably higher than $C_{Mn}$ by 20 mol% or more. In addition, the value obtained by subtracting $C_{Mn}$ from $C_{Ni}$ is preferably 35 mol% or less, more preferably 30 mol% or less, still more preferably 25 mol% or less.

The lithium transition metal composite oxide (b) preferably further contains a cobalt element. In a preferred aspect, the content $C_{Co}$ of the cobalt element with respect to the transition metal element in the lithium transition metal composite oxide (b) is higher than the content $C_{Mn}$ of the manganese element. This can more suitably keep the resistance of the nonaqueous electrolyte energy storage device from being increased after a charge-discharge cycle. For example, the relationship between $C_{Co}$ and $C_{Mn}$ preferably satisfies $1.0 < C_{Co}/C_{Mn} < 3.0$, more preferably satisfies $1.0 < C_{Co}/C_{Mn} \leq 2.5$, still more preferably satisfies $1.1 \leq C_{Co}/C_{Mn} \leq 2.0$. $C_{Co}$ is preferably higher than $C_{Mn}$ by 10 mol% or more. In addition, the value obtained by subtracting $C_{Mn}$ from $C_{Co}$ is preferably 30 mol% or less, more preferably 20 mol% or less, still more preferably 15 mol% or less. In addition, the lithium transition metal composite oxide (b) may further contain a typical metal element (for example, an aluminum element or the like), except for the transition metal elements excluding the nickel element, the manganese element, and the cobalt element, and the lithium element. The content of the cobalt element with respect to the transition metal element, the total content of the nickel element, manganese element, and cobalt element with respect to the transition metal element, and the total content of the nickel element, manganese element, and cobalt element with respect to the metal elements excluding the lithium element in the lithium transition metal composite oxide (b) can be set to fall within same ranges as the contents in the lithium transition metal composite oxide (a).

The lithium transition metal composite oxide may be a compound represented by the following formula 1.

$$\mathrm{Li}_{1+\alpha}\mathrm{Me}_{1-\alpha}\mathrm{O}_2 \ldots \qquad 1$$

In the formula 1, Me is a transition metal element containing Ni and Mn. The condition of $0 \le \alpha < 1$ is met.

In the formula 1, $\alpha$ may be 0 or more and 0.5 or less, 0 or more and 0.3 or less, or 0 or more and 0.1 or less. Me preferably further contains Co in addition to Ni and Mn. For the content (composition ratio) of each of Ni, Mn, Co, and the like with respect to Me, a suitable value of the content can be employed for each of the transition metal elements in the lithium transition metal composite oxide (a) and the lithium transition metal composite oxide (b). Me may further contain a transition metal element other than Mn, Ni, and Co.

The composition ratio of the lithium transition metal composite oxide refers to a composition ratio before charge-discharge or in the case of a completely discharged state provided by the following method. First, the nonaqueous electrolyte energy storage device is subjected to constant current discharge at a discharge current of 0.05C to the lower limit voltage under normal use. The nonaqueous electrolyte energy storage device in this state is disassembled to take out the positive electrode, a half cell with metal Li as a counter electrode is assembled, subjected to constant current discharge at a discharge current of 10 mA per 1 g of the positive active material until the positive potential reaches 3.0 V vs. Li/Li$^+$ adjust the positive electrode to the completely discharged state. The cell is disassembled again to take out the positive electrode. The components (electrolyte and the like) attached to the positive electrode taken out is sufficiently washed with a dimethyl carbonate, and dried under reduced pressure at room temperature for 24 hours, and the lithium transition metal composite oxide of the positive active material is then collected. The collected lithium transition metal composite oxide is subjected to measurement. The operations from the disassembly of the nonaqueous electrolyte energy storage device to the collection of the lithium transition metal composite oxide for measurement are performed in an argon atmosphere at a dew point of -60°C or lower.

The surface of the lithium transition metal composite oxide may be coated with another material. Examples of another material for coating the surface include compounds containing elements such as an aluminum element, a tungsten element, and a boron element.

The content of the lithium transition metal composite oxide in the positive active material layer is preferably 50% by mass or more and 99% by mass or less, more preferably 70% by mass or more and 98% by mass or less, still more preferably 80% by mass or more and 95% by mass or less. The content of the lithium transition metal composite oxide falls within the range mentioned above, thereby allowing the initial resistance to be further reduced while achieving a balance between the increased energy density and manufacturability of the positive active material layer.

The positive active material may further include a positive active material other than the lithium transition metal composite oxide. As the other positive active material, various conventionally known positive active materials can be used. The content of the lithium transition metal composite oxide with respect to all of the positive active materials included in the positive active material layer is preferably 90% by mass or more, more preferably 99% by mass or more. Mainly using the lithium transition metal composite oxide as the positive active material as described above allows the initial resistance to be further reduced.

The content of all of the positive active materials in the positive material layer is preferably 50% by mass or more and 99% by mass or less, more preferably 70% by mass or more and 98% by mass or less, still more preferably 80% by mass or more and 95% by mass or less. When the content of all of the positive active materials falls within the range mentioned above, a balance can be achieved between the increased energy density and manufacturability of the positive active material layer.

The positive active material is typically particles (powder). The average particle size of the positive active material is preferably 0.1 pm or more and 20 pm or less, for example. By setting the average particle size of the positive active material to be equal to or more than the lower limit, the positive active material is easily manufactured or handled. By setting the average particle size of the positive active material to be equal to or less than the upper limit mentioned above, the electron conductivity of the positive active material layer is improved. It is to be noted that in the case of using a composite of the positive active material and another material, the average particle size of the composite is regarded as the average particle size of the positive active material.

A crusher a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. In addition, these materials may be used in combination. For example, a composite material of carbon black and CNT may be used. Among these materials, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. The content of the conductive agent falls within the range mentioned above, thereby allowing the energy density of the secondary battery to be increased.

Examples of the binder mentioned above include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 2% by mass or more and 9% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agent, the binder, the thickener, and the filler.

The mass per unit area of the positive active material layer is preferably 4 mg/cm$^2$ or more and 12 mg/cm$^2$ or less, more preferably 5 mg/cm$^2$ or more and 8 mg/cm$^2$ or less. In the nonaqueous electrolyte energy storage device including the positive electrode in which the mass per unit area of the positive active material layer falls within the range mentioned above, the above-described effects can be more efficiently produced. "The mass per unit area of the positive active material layer" refers to a mass per unit area of one positive active material layer. For example, when the positive electrode has a positive substrate with the positive active material layer provided on each of both surfaces of the positive substrate, "the mass per unit area of the positive active material layer" is a mass per unit area of the positive active material layer on one of the surfaces.

(Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel or a nickel-plated steel, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. The average thickness of the negative substrate falls within the range mentioned above, thereby allowing the energy density per volume of the secondary battery to be increased while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, or transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material includes solid graphite. The negative active material includes the solid graphite, thereby allowing the resistance to be kept form being increased after a charge-discharge cycle. The above-mentioned void area ratio (porosity) in the particle to the area of the whole particle in the cross section of the solid graphite, observed in the SEM image, is 2% or less, more preferably 1% or less, still more preferably 0.5% or less. In some aspects, the area ratio (porosity) of the solid graphite may be 0.3% or less or 0.1% or less. The lower limit of the area ratio (porosity) may be 0%. In some aspects, the area ratio (porosity) of the solid graphite may be 0.03% or more or 0.3% or more.

The solid graphite may be natural graphite or artificial graphite, but is preferably natural graphite. The solid graphite is natural graphite (solid natural graphite), thereby allowing, for example, the initial resistance of the nonaqueous electrolyte energy storage device to be further reduced, and the resistance to be further kept from being increased after a charge-discharge cycle.

The natural graphite is a generic term for graphite obtained from natural resources. The shape of the solid natural graphite is not particularly limited, and examples thereof include scale-like graphite, massive graphite (flake graphite), and earthy graphite. The solid natural graphite may be spheroidized natural graphite particles obtained by spheroidizing scale-like natural graphite or the like. The natural graphite may have four peaks appearing at diffraction angles $2\theta$ in the range from 40° to 50° in an X-ray diffraction pattern obtained with the use of CuK$\alpha$, measured before charge-discharge or in a discharged state. These four peaks are considered to be two peaks derived from a hexagonal structure and two peaks derived from a rhombohedral structure. In the case of artificial graphite, generally, only two peaks derived from a hexagonal structure are considered to appear. In the X-ray diffraction pattern, the ratio ((012)/(100)) of the peak intensity derived from the (012) plane to the peak intensity derived from the (100) plane is preferably 0.3 or more, more preferably 0.4 or more. The ratio of the peak intensities ((012)/(100)) is preferably 0.6 or less. In this regard, the (100) plane is derived from the hexagonal structure, and the (012) plane is derived from the rhombohedral structure.

The average particle size of the solid graphite is preferably 1 pm or more and 25 pm or less, more preferably 4 $\mu$m or more and 20 pm or less, still more preferably 5 pm or more and 15 pm or less. The lower limit of the average particle size of the solid graphite is even more preferably 6 pm, 7 pm, 8 pm, or 9 pm in some cases. The average particle size of the solid graphite falls within the range mentioned above, thereby allowing the charge-discharge performance of the nonaqueous electrolyte energy storage device to be enhanced. In particular, when the average particle size of the solid graphite is equal to or more than the above-mentioned lower limit, the contact of the solid graphite with the negative substrate and the contact between the particles of the solid graphite are enhanced, and as a result, the resistance is further kept from being increased after a charge-discharge cycle, and the productivity and the like are enhanced. A crusher, a classifier, or the like is used in order to obtain solid graphite with a predetermined particle size. The crushing method and the classification method can be selected from, for example, the methods exemplified for the positive electrode.

The solid graphite may be particles with pores (pores) at the surface. The porous degree of the solid graphite is preferably 5% or more and 20% or less, more preferably 9% or more and 15% or less. The porous degree of the solid graphite is equal to or more than the above-mentioned lower limit, thereby securing a sufficient surface area, and allowing charge-discharge performance to be enhanced. In contrast, the porous degree of the solid graphite is equal to or less than the above-mentioned upper limit, thereby providing dense particles, and allowing the energy density to be increased. The term "porous degree" is a value that indicates the ratio of pores (pores), and is a value that is based on the total pore volume measured by the BJH method. Specifically, when solid graphite before preparation of the negative electrode can be prepared, the solid graphite is directly subjected to the measurement of the total pore volume. In the case of preparing from the assembled nonaqueous electrolyte energy storage device, a step of collecting the solid graphite from the negative electrode in a discharged state in accordance with the procedure of measuring the above-mentioned "void area ratio (porosity) in the particle to the area of the whole particle" and immersing the solid graphite in a dimethyl carbonate for 5 minutes is repeated twice to sufficiently remove the nonaqueous electrolyte, and the solid graphite dried under reduced pressure at room temperature for 24 hours is subjected to the measurement of the total pore volume. From the pore volume V per unit mass of the obtained solid graphite and the true density D of the solid graphite, the porous degree (%) is determined by the following formula 2.

$$\text{Porous degree (\%)} = V/\{V + (1/D)\} \ldots 2$$

Further, as for this porous degree, the volume of voids in the particles closed from the outside is not measured in the measurement of the total pore volume by the BJH method, and thus, the porosity is an index that is different from the above-mentioned void area ratio (porosity) in the particle to the area of the whole particle in the cross section of the solid graphite, observed in the SEM image.

The content of the solid graphite in the negative active material layer is preferably 60% by mass or more and 99% by mass or less, more preferably 90% by mass or more and 98% by mass or less, and is still more preferably 95% by mass or more, 97% by mass or more, or 98% by mass or more in some cases. The content of solid graphite falls within the range mentioned above, thereby allowing a balance to be achieved between the increased energy density and manufacturability of the negative active material layer, and allowing the resistance to be further kept from being increased after a charge-discharge cycle.

The negative active material may include other negative active materials besides the solid graphite. As the other negative active materials, hollow graphite (graphite other than solid graphite, in which the void area ratio in the particle to the area of the whole particle in the cross section of the graphite, observed in the SEM image, is more than 2%) and other various conventionally known negative active materials can be used. The content of solid graphite in all of the negative active materials included in the negative active material layer is, however, preferably 90% by mass or more, more preferably 99% by mass or more, and may be substantially 100% by mass. Mainly using the solid graphite as the negative active material as described above particularly sufficiently suppresses the change in the volume of the negative active material layer by expansion and shrinkage of the negative active material due to charge-discharge, thereby allowing the resistance to be further kept from being increased after a charge-discharge cycle.

The content of all of the negative active materials in the negative active material layer is preferably 60% by mass or more and 99% by mass or less, and more preferably 90% by mass or more and 98% by mass or less. The content of all of the negative active materials in the negative active material layer may be 95% by mass or more, 97% by mass or more, or 98% by mass or more. When the content of all of the negative active materials falls within the range mentioned above, a balance can be achieved between the increased energy density and manufacturability of the negative active material layer.

The content of the binder in the negative active material layer is preferably 0.5% by mass or more and 10% by mass or less, more preferably 1% by mass or more and 6% by mass or less. The content of the binder in the negative active material layer may be 3% by mass or less, 2% by mass or less, or 1.5% by mass or less (for example, 1.2% by mass or less). The content of the binder in the negative active material layer falls within the range mentioned above, thereby allowing the negative active material to be stably held.

The content of the thickener in the negative active material layer is preferably 0.3% by mass or more and 4% by mass or less, more preferably 0.5% by mass or more and 2% by mass or less.

The mass per unit area of the negative active material layer is preferably 2.5 mg/cm$^2$ or more and 6 mg/cm$^2$ or less, more preferably 3 mg/cm$^2$ or more and 5 mg/cm$^2$ or less. In the nonaqueous electrolyte energy storage device including the positive electrode in which the mass per unit area of the negative active material layer falls within the range mentioned above, the above-described effects can be more efficiently produced. "The mass per unit area of the negative active material layer" refers to a mass per unit area of one negative active material layer. For example, when the negative electrode has a negative substrate with the negative active material layer provided on each of both surfaces of the negative substrate, "the mass per unit area of the negative active material layer" is a mass per unit area of the negative active material layer on one of the surfaces.

(Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material of the substrate layer of the separator, a polyolefin such as polyethylene or polypropylene is preferable from the viewpoint of a shutdown function, and polyimide, aramid or the like is preferable from the viewpoint of resistance to oxidation and decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

(Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some hydrogen atoms contained in these compounds are substituted with halogen atoms may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be typically selected appropriately from known lithium salts and then used.

Examples of the lithium salt include inorganic lithium salts such as LiPFs, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these salts, an inorganic lithium salt is preferable, and $LiPF_6$ is more preferable.

The content of the electrolyte salt in the nonaqueous electrolyte solution is, at 20°C and 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, particularly preferably 0.7 mol/dm$^3$ or more and 1.5 mol/dm$^3$ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, and tetrakistrimethylsilyl titanate. One of these additives may be used alone, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. The content of the additive falls within the range mentioned above, thereby making it possible to improve capacity retention performance or cycle performance after high-temperature storage, and to further improve safety.

For the nonaqueous electrolyte, a solid electrolyte may be used, or a nonaqueous electrolyte solution and a solid electrolyte may be used in combination.

The solid electrolyte can be selected from arbitrary materials with lithium ion conductivity, which are solid at normal temperature (for example, from 15°C to 25°C). Examples of the solid electrolyte include sulfide solid electrolytes, oxide solid electrolytes, nitride solid electrolytes, and polymer solid electrolytes.

Examples of the sulfide solid electrolytes include $Li_2S-P_2S_5$, $LiI-Li_2SP_2S_5$, and $Li_{10}Ge-P_2S_{12}$.

The shape of the nonaqueous electrolyte energy storage device according to the present embodiment is not particularly limited, and examples thereof include cylindrical batteries, prismatic batteries, flat batteries, coin batteries, and button batteries.

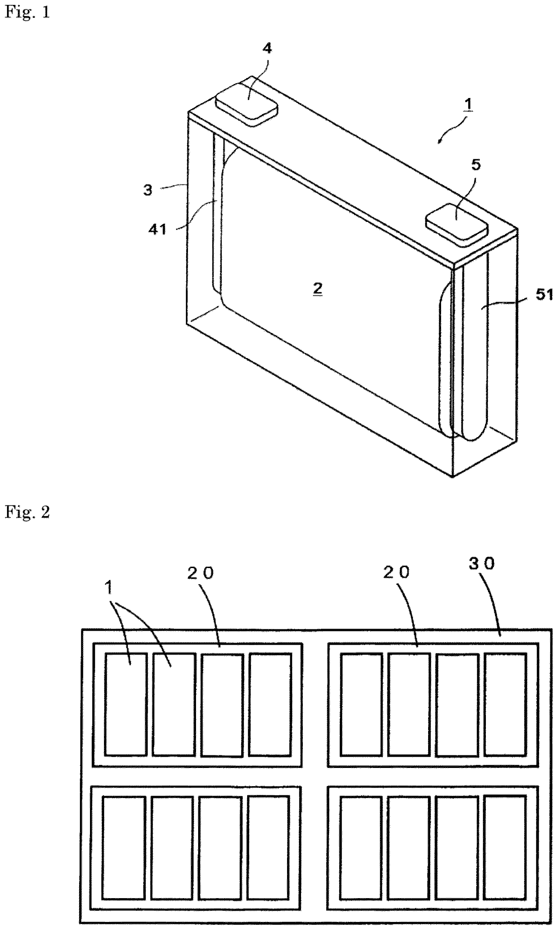

Fig. 1 illustrates a nonaqueous electrolyte energy storage device 1 as an example of prismatic batteries. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

<Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 shows an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

<Method for manufacturing nonaqueous electrolyte energy storage device>

A method for manufacturing the nonaqueous electrolyte energy storage device according to the present embodiment can be appropriately selected from publicly known methods. The manufacturing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming an electrode assembly by stacking or winding the positive electrode and the negative electrode with a separator interposed therebetween.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

<Other embodiments>

The nonaqueous electrolyte energy storage device according to the present invention is not limited to the embodiment described above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to one embodiment can be deleted. In addition, a well-known technique can be added to the configuration according to one embodiment.

While a case where the nonaqueous electrolyte energy storage device is used as a nonaqueous electrolyte secondary battery (lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to various secondary batteries.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

EXAMPLES

Hereinafter, the present invention will be described in more detail with reference to examples, but the present invention is not to be considered limited to the following examples.

[Example 1]

(Fabrication of positive electrode)

A positive composite paste was prepared with the use of $LiNi_{0.50}Co_{0.35}Mn_{0.15}O_2$ as a positive active material, acetylene black (AB) as a conductive agent, a polyvinylidene fluoride (PVDF) as a binder, and an N-methylpyrrolidone (NMP) as a dispersion medium. It is to be noted that the mass ratios of the positive active material, AB, and PVDF were set to be 93 : 3.5 : 3.5 (in terms of solid content). The positive composite paste was applied to both surfaces of an aluminum foil as a positive substrate such that the applied mass of the solid content was 7.0 mg/cm$^2$, and dried. Thereafter, roll pressing was performed to obtain a positive electrode.

(Fabrication of negative electrode)

Solid naturel graphite (porosity: 0.45%, porous degree: 10.3%, average particle size: 9.9 pm) as a negative active material, a styrenebutadiene rubber (SBR) as a binder, carboxymethyl cellulose (CMC) as a thickener, and water as a dispersion medium were used to prepare a negative composite paste. It is to be noted that the mass ratios of graphite, SBR, and CMC were set to be 98 : 1 : 1 (in terms of solid content). The negative composite paste was applied to both surfaces of a copper foil as a negative substrate such that the applied mass of the solid content was 4.6 mg/cm$^2$, and dried. Thereafter, roll pressing was performed to obtain a negative electrode.

(Nonaqueous electrolyte solution)

LiPFs was dissolved at a concentration of 1.2 mol/dm$^3$ in a solvent obtained by mixing an ethylene carbonate and an ethyl methyl carbonate at a volume ratio of 30 : 70 to obtain a nonaqueous electrolyte solution.

(Separator)

A polyolefin microporous membrane was used for the separator.

(Assembly of nonaqueous electrolyte energy storage device)

The positive electrode, the negative electrode, and the separator were used to obtain a wound electrode assembly. The electrode assembly was housed in a case, the nonaqueous electrolyte solution was injected into the case, and the case was sealed to obtain a nonaqueous electrolyte energy storage device (secondary battery) according to Example 1.

[Comparative Examples 1 and 2 and Reference Example 1]

Nonaqueous electrolyte energy storage devices according to Comparative Examples 1 and 2 and Reference Example 1 were obtained similarly to Example 1, except for using the positive active material and negative active material listed in Table 1. Further, hollow natural graphite with a porosity of 3%, a porous degree of 7.5%, and an average particle size of 9.1 pm was used for the hollow natural graphite in Table 1.

[Evaluation]

(1-1) Initial charge-discharge

The obtained nonaqueous electrolyte energy storage devices according to Examples 1, Comparative Examples 1 and 2, and Reference Example 1 were each subjected to initial charge-discharge under the following conditions. In a thermostatic chamber at 25°C, the nonaqueous electrolyte energy storage devices were subjected to constant current charge at a charge current of 1.0 C and an end-of-charge voltage of 4.10 V, and then to constant voltage charge at 4.10 V With regard to the charge termination conditions, the charge was performed until the total charge time reached 3 hours. Thereafter, a pause period of 10 minutes was provided. The nonaqueous electrolyte energy storage devices were subjected to constant current discharge at a discharge current of 1.0 C and an end-of-discharge voltage of 2.50 V.

(1-2) Initial resistance

The respective nonaqueous electrolyte energy storage devices subjected to the initial charge-discharge were each subjected to constant current charge at a charge current of 1.0 C in a thermostatic chamber at 25°C to the SOC of 50%. The nonaqueous electrolyte energy storage devices were stored in a thermostatic chamber at 25°C for 3 hours or longer, and then discharged for 30 seconds at a discharge current of 0.1 C, 0.2 C, and 0.3 C. After completion of each discharge, the nonaqueous electrolyte energy storage devices were subjected to constant current charge at a charge current of 0.05 C to the SOC of 50%. The relationship between the discharge current and the voltage at 10 seconds after the start of discharge for each discharge was plotted, and the initial resistance (direct-current resistance) was determined from the slope of a straight line obtained from the plot of three points. Table 1 shows the initial resistance (relative value) of each of the nonaqueous electrolyte energy storage devices, based on the initial resistance of the nonaqueous electrolyte energy storage device in which the positive active material is $LiNi_{0.33}Co_{0.33}Mn_{0.33}O_2$ as a reference (100%), between the nonaqueous electrolyte energy storage devices with the same negative active material used. More specifically, the initial resistance of Example 1 indicates a relative value based on the initial resistance of Comparative Example 1 as a reference, and the initial resistance of Reference Example 1 indicates a relative value based on the initial resistance of Comparative Example 2 as a reference.

[Table 1]

| | Positive active material | Negative active material | | Initial resistance (relative value) (%) |
| --- | --- | --- | --- | --- |
| | Type | Type | Porosity (%) | |
| Example 1 | $LiNi_{0.50}Co_{0.35}Mn_{0.15}O_2$ | Solid natural graphite | 0.45 | 91 |
| Comparative Example 1 | $LiNi_{0.33}Co_{0.33}Mn_{0.33}O_2$ | Solid natural graphite | 0.45 | 100 |
| Reference Example 1 | $LiNi_{0.50}Co_{0.35}Mn_{0.15}O_2$ | Hollow natural graphite | 3 | 90 |
| Comparative Example 2 | $LiNi_{0.33}Co_{0.33}Mn_{0.33}O_2$ | Hollow natural graphite | 3 | 100 |

As shown in Table 1, it is found that the initial resistance of the nonaqueous electrolyte energy storage device is low in the case of using, as the positive active material, the lithium transition gold electrode composite oxide containing a nickel element and a manganese element in which the content of the nickel element with respect to the transition metal element is 40 mol% or more, or the content of the manganese element with respect to the transition metal element is 30 mol% or less, regardless of the type of the graphite as the negative active material.

[Example 2]

(Fabrication of positive electrode)

A positive composite paste was prepared with the use of $LiNi_{0.50}Co_{0.35}Mn_{0.15}O_2$ as a positive active material, acetylene black (AB) as a conductive agent, a polyvinylidene fluoride (PVDF) as a binder, and an N-methylpyrrolidone (NMP) as a dispersion medium. It is to be noted that the mass ratios of the positive active material, AB, and PVDF were set to be 93 : 3.5 : 3.5 (in terms of solid content). The positive composite paste was applied to both surfaces of an aluminum foil as a positive substrate, and dried. Thereafter, roll pressing was performed to obtain a positive electrode.

(Fabrication of negative electrode)

Solid naturel graphite (porosity: 0.45%, porous degree: 10.3%, average particle size: 9.9 pm) as a negative active material, a styrenebutadiene rubber (SBR) as a binder, carboxymethyl cellulose (CMC) as a thickener, and water as a dispersion medium were used to prepare a negative composite paste. It is to be noted that the mass ratios of graphite, SBR, and CMC were set to be 98 : 1 : 1 (in terms of solid content). The negative composite paste was applied to both surfaces of a copper foil as a negative substrate, and dried. Thereafter, roll pressing was performed to obtain a negative electrode.

(Nonaqueous electrolyte solution)

LiPFs was dissolved at a concentration of 1.2 mol/dm$^3$ in a solvent obtained by mixing an ethylene carbonate and an ethyl methyl carbonate at a volume ratio of 30 : 70 to obtain a nonaqueous electrolyte solution.

(Separator)

A polyolefin microporous membrane was used for the separator.

(Assembly of nonaqueous electrolyte energy storage device)

The positive electrode, the negative electrode, and the separator were used to obtain a wound electrode assembly. The electrode assembly was housed in a case, the nonaqueous electrolyte solution was injected into the case, and the case was sealed to obtain a nonaqueous electrolyte energy storage device (secondary battery) according to Example 2.

[Comparative Examples 3 to 5]

Nonaqueous electrolyte energy storage devices according to Comparative Examples 3 to 5 were obtained similarly to Example 2, except for using the positive active material and negative active material listed in Table 2. Further, hollow natural graphite with a porosity of 3%, a porous degree of 7.5%, and an average particle size of 9.1 pm was used for the hollow natural graphite in Table 2.

[Evaluation]

(2-1) Initial charge-discharge

The obtained nonaqueous electrolyte energy storage devices according to Example 2 and Comparative Examples 3 to 5 were each subjected to initial charge-discharge in accordance with the same procedure as in (1-1) mentioned above. The discharge capacity at this time was defined as an initial discharge capacity.

(2-2) Initial resistance

For each of the nonaqueous electrolyte energy storage devices subjected to the initial charge-discharge mentioned above, the initial resistance (direct-current resistance) was measured in accordance with the same procedure as in (1-2) mentioned above.

(2-3) Charge-discharge cycle test

Subsequently, the following charge-discharge cycle test was performed. In a thermostatic chamber at 60°C, the nonaqueous electrolyte energy storage device was subjected to constant current charge with an amount of electricity of 80% of the initial discharge capacity at a charge current of 8 C to adjust the SOC to 80%. Thereafter, the nonaqueous electrolyte energy storage device was subjected to constant current discharge with an amount of electricity of 60% of the initial discharge capacity at a discharge current of 8 C without providing any pause period to adjust the SOC to 20%. Thereafter, the nonaqueous electrolyte energy storage device was subjected to constant current charge with an amount of electricity of 60% of the initial discharge capacity without providing any pause period to adjust the SOC to 80%.

Thereafter, the nonaqueous electrolyte energy storage device was subjected to constant current discharge with an amount of electricity of 60% of the initial discharge capacity at a discharge current of 8 C without providing any pause period to adjust the SOC to 20%. This charge-discharge was repeated until reaching 2000 hours from the start of the first charge at 60°C.

(2-4) Resistance increase suppression rate after charge-discharge cycle

Thereafter, the resistance of each of the nonaqueous electrolyte energy storage devices subjected to the charge-discharge cycle test was measured in accordance with the same procedure as in the (1-2) mentioned above, and defined as the resistance after the charge-discharge cycle. The resistance increase rate (%) of each of the nonaqueous electrolyte energy storage devices was determined from the initial resistance and the resistance after charge-discharge cycles, and the resistance increase suppression rate (%) was determined for each of the nonaqueous electrolyte energy storage devices according to Example 2 and Comparative Example 4. The resistance increase suppression rate (%) is a value that is determined by the following formula 3.

$$\text{Resistance increase suppression rate (\%)} = \{(x \cdot y)/x\} \times 100 \ldots 3$$

In the formula 3, x is the resistance increase rate of the nonaqueous electrolyte energy storage device X (Comparative Example 3 or Comparative Example 5) in which the negative active material is hollow graphite, y is the resistance increase rate of the nonaqueous electrolyte energy storage device Y (Example 2 or Comparative Example 4) that is different from the nonaqueous electrolyte energy storage device X only in that the negative active material is solid graphite. For example, in the case of determining the resistance increase suppression rate (%) in the nonaqueous electrolyte energy storage device according to Example 2, the nonaqueous electrolyte energy storage device X is the nonaqueous electrolyte energy storage device according to Comparative Example 3, and the nonaqueous electrolyte energy storage device Y is the nonaqueous electrolyte energy storage device according to Example 2.
The determined resistance increase suppression rates (%) of the respective nonaqueous electrolyte energy storage devices according to Example 2 and Comparative Example 4 are shown in Table 2.

[Table 2]

|  | Positive active material | Negative active material | | Resistance increase suppression rate (%) |
|---|---|---|---|---|
|  | Type | Type | Porosity (%) | |
| Example 2 | $LiNi_{0.50}Co_{0.35}Mn_{0.15}O_2$ | Solid natural graphite | 0.45 | 17.6 |
| Comparative Example 3 | $LiNi_{0.50}Co_{0.35}Mn_{0.15}O_2$ | Hollow natural graphite | 3 | - |
| Comparative Example 4 | $LiNi_{0.33}Co_{0.33}Mn_{0.33}O_2$ | Solid natural graphite | 0.45 | -5.0 |
| Comparative Example 5 | $LiNi_{0.33}Co_{0.33}Mn_{0.33}O_2$ | Hollow natural graphite | 3 | - |

As shown in Table 2, it is found from comparison between Example 2 and Comparative Example 3 that the use of the solid graphite as the negative active material can suppress an increase in resistance after a charge-discharge cycle in the case of using, as the positive active material, the lithium transition gold electrode composite oxide containing a nickel element and a manganese element in which the content of the nickel element with respect to the transition metal element is 40 mol% or more, or the content of the manganese element with respect to the transition metal element is 30 mol% or less. In contrast, it is found from comparison between Comparative Example 4 and Comparative Example 5 that the effect of suppressing an increase in resistance after a charge-discharge cycle with the use of the solid graphite as the negative active material is not produced in the case of using the positive active material that is not the lithium transition gold electrode composite oxide containing a nickel element and a manganese element in which the content of the nickel element with respect to the transition metal element is 40 mol% or more, or the content of the manganese element with respect to the transition metal element is 30 mol% or less.

[Example 3]

(Fabrication of positive electrode)

A positive composite paste was prepared with the use of $LiNi_{0.45}Co_{0.35}Mn_{0.20}O_2$ as a positive active material, acetylene black (AB) as a conductive agent, a polyvinylidene fluoride (PVDF) as a binder, and an N-methylpyrrolidone (NMP) as a dispersion medium. It is to be noted that the mass ratios of the positive active material, AB, and PVDF were set to be 93 : 3.5 : 3.5 (in terms of solid content). The positive composite paste was applied to both surfaces of an aluminum foil as a positive substrate such that the applied mass of the solid content was $7.1 \ mg/cm^2$, and dried. Thereafter, roll pressing was performed to obtain a positive electrode.

(Fabrication of negative electrode)

Solid naturel graphite (porosity: 0.45%, porous degree: 10.3%, average particle size: 9.9 pm) as a negative active material, a styrene-butadiene rubber (SBR) as a binder, carboxymethyl cellulose (CMC) as a thickener, and water as a dispersion medium were used to prepare a negative composite paste. It is to be noted that the mass ratios of graphite, SBR, and CMC were set to be 98 : 1 : 1 (in terms of solid content). The negative composite paste was applied to both surfaces of a copper foil as a negative substrate such that the applied mass of the solid content was $4.0 \ mg/cm^2$, and dried. Thereafter, roll pressing was performed to obtain a negative electrode.

(Nonaqueous electrolyte solution)

LiPFs was dissolved at a concentration of $1.2 \ mol/dm^3$ in a solvent obtained by mixing an ethylene carbonate and an ethyl methyl carbonate at a volume ratio of 30 : 70 to obtain a nonaqueous electrolyte solution.

(Separator)

A polyolefin microporous membrane was used for the separator.

(Assembly of nonaqueous electrolyte energy storage device)

The positive electrode, the negative electrode, and the separator were used to obtain a wound electrode assembly. The electrode assembly was housed in a case, the nonaqueous electrolyte solution was injected into the case, and the case was sealed to obtain a nonaqueous electrolyte energy storage device (secondary battery) according to Example 3.

[Comparative Example 6]

A nonaqueous electrolyte energy storage device according to Comparative Example 6 were obtained similarly to Example 3, except for using the negative active material listed in Table 3. Further, hollow natural graphite with a porosity of 3%, a porous degree of 7.5%, and an average particle size of 9.1 pm was used for the hollow natural graphite in Table 3.

[Evaluation]

In accordance with the same procedures as in (2-1) to (2-4) mentioned above, the resistance increase rate (%) after the charge-discharge cycle was determined for each of the nonaqueous electrolyte energy storage devices according to Example 3 and Comparative Example 6, and the resistance increase suppression rate (%) was determined for the nonaqueous electrolyte energy storage device according to Example 3. The determined resistance increase suppression rate (%) of Example 3 is shown in Table 3.

[Table 3]

| | Positive active material | Negative active material | | Resistance increase suppression rate (%) |
| --- | --- | --- | --- | --- |
| | Type | Type | Porosity (%) | |
| Example 3 | $LiNi_{0.45}Co_{0.35}Mn_{0.20}O_2$ | Solid natural graphite | 0.45 | 18.1 |

(continued)

|  | Positive active material | Negative active material | | Resistance increase suppression rate (%) |
| --- | --- | --- | --- | --- |
|  | Type | Type | Porosity (%) | |
| Comparative Example 6 | $LiNi_{0.45}Co_{0.35}Mn_{0.20}O_2$ | Hollow natural graphite | 3 | - |

As shown in Table 3, it is found that also in the nonaqueous electrolyte energy storage device according to Example 3, an increase in resistance after a charge-discharge cycle can be suppressed similarly to the nonaqueous electrolyte energy storage device according to Example 2.

[Example 4]

(Fabrication of positive electrode)

A positive composite paste was prepared with the use of $LiNi_{0.45}Co_{0.35}Mn_{0.20}O_2$ as a positive active material, acetylene black (AB) as a conductive agent, a polyvinylidene fluoride (PVDF) as a binder, and an N-methylpyrrolidone (NMP) as a dispersion medium. It is to be noted that the mass ratios of the positive active material, AB, and PVDF were set to be 93 : 3.5 : 3.5 (in terms of solid content). The positive composite paste was applied to both surfaces of an aluminum foil as a positive substrate such that the applied mass of the solid content was 6.6 mg/cm$^2$, and dried. Thereafter, roll pressing was performed to obtain a positive electrode.

(Fabrication of negative electrode)

Solid naturel graphite (porosity: 0.03%, average particle size: 9.9 pm) as a negative active material, a styrene-butadiene rubber (SBR) as a binder, carboxymethyl cellulose (CMC) as a thickener, and water as a dispersion medium were used to prepare a negative composite paste. It is to be noted that the mass ratios of graphite, SBR, and CMC were set to be 98 : 1 : 1 (in terms of solid content). The negative composite paste was applied to both surfaces of a copper foil as a negative substrate such that the applied mass of the solid content was 4.2 mg/cm$^2$, and dried. Thereafter, roll pressing was performed to obtain a negative electrode.

(Nonaqueous electrolyte solution)

LiPFs was dissolved at a concentration of 1.2 mol/dm$^3$ in a solvent obtained by mixing an ethylene carbonate and an ethyl methyl carbonate at a volume ratio of 30 : 70 to obtain a nonaqueous electrolyte solution.

(Separator)

A polyolefin microporous membrane was used for the separator.

(Assembly of nonaqueous electrolyte energy storage device)

The positive electrode, the negative electrode, and the separator were used to obtain a wound electrode assembly. The electrode assembly was housed in a case, the nonaqueous electrolyte solution was injected into the case, and the case was sealed to obtain a nonaqueous electrolyte energy storage device (secondary battery) according to Example 4.

[Comparative Examples 7 to 9]

Nonaqueous electrolyte energy storage devices according to Comparative Examples 7 to 9 were obtained similarly to Example 4, except for using the positive active material and negative active material listed in Table 4. Further, hollow natural graphite with a porosity of 3%, a porous degree of 7.5%, and an average particle size of 9.1 pm was used for the hollow natural graphite in Table 4.

[Evaluation]

(3-1) Initial charge-discharge

The obtained nonaqueous electrolyte energy storage devices according to Example 4 and Comparative Examples 7 to 9 were each subjected to initial charge-discharge in accordance with the same procedure as in (1-1) mentioned above. The discharge capacity at this time was defined as an initial discharge capacity.

(3-2) Initial resistance

For each of the nonaqueous electrolyte energy storage devices subjected to the initial charge-discharge mentioned above, the initial resistance (direct-current resistance) was measured in accordance with the same procedure as in (1-2) mentioned above.

(3-3) Charge-discharge cycle test

Subsequently, the following charge-discharge cycle test was performed. In a thermostatic chamber at 55°C, the nonaqueous electrolyte energy storage device was subjected to constant current charge with an amount of electricity of 85% of the initial discharge capacity at a charge current of 8 C to adjust the SOC to 85%. Thereafter, the nonaqueous electrolyte energy storage device was subjected to constant current discharge with an amount of electricity of 70% of the initial discharge capacity at a discharge current of 8 C without providing any pause period to adjust the SOC to 15%. Thereafter, the nonaqueous electrolyte energy storage device was subjected to constant current charge with an amount of electricity of 70% of the initial discharge capacity without providing any pause period to adjust the SOC to 85%. Thereafter, the nonaqueous electrolyte energy storage device was subjected to constant current discharge with an amount of electricity of 70% of the initial discharge capacity at a discharge current of 8 C without providing any pause period to adjust the SOC to 15%. This charge-discharge was performed for 1430 cycles with the first charge-discharge at 55°C as the first cycle.

(3-4) Resistance increase suppression rate after charge-discharge cycle

Thereafter, in accordance with the same procedure as in (2-4) mentioned above, the resistance increase rate (%) after the charge-discharge cycle was determined for each of the nonaqueous electrolyte energy storage devices according to Example 4 and Comparative Examples 7 to 9, and the resistance increase suppression rate (%) was determined for each of the nonaqueous electrolyte energy storage devices according to Example 4 and Comparative Example 8. The determined resistance increase rates (%) of the respective nonaqueous electrolyte energy storage devices according to Example 4 and Comparative Examples 7 to 9 and the determined resistance increase suppression rates (%) of the respective nonaqueous electrolyte energy storage devices according to Example 4 and Comparative Example 8 are shown in Table 4.

[Table 4]

| | Positive active material | Negative active material | | Resistance increase rate (%) | Resistance increase suppression rate (%) |
|---|---|---|---|---|---|
| | Type | Type | Porosity (%) | | |
| Example 4 | $LiNi_{0.45}Co_{0.35}Mn_{0.20}O_2$ | Solid natural graphite | 0.03 | 1.9 | 62.9 |
| Comparative Example 7 | $LiNi_{0.45}Co_{0.35}Mn_{0.20}O_2$ | Hollow natural graphite | 3 | 5.1 | - |
| Comparative Example 8 | $LiNi_{0.33}Co_{0.33}Mn_{0.33}O_2$ | Solid natural graphite | 0.03 | 5.0 | 17.4 |
| Comparative Example 9 | $LiNi_{0.33}Co_{0.33}Mn_{0.33}O_2$ | Hollow natural graphite | 3 | 6.1 | - |

As shown in Table 4, it is found that also in the nonaqueous electrolyte energy storage device according to Example 4, an increase in resistance after a charge-discharge cycle can be suppressed similarly to the respective nonaqueous electrolyte energy storage devices according to Examples 2 and 3. Further, as compared with the charge-discharge cycle tests for the examples and comparative examples in Tables 2 and 3, the difference in SOC between charge-discharge is larger in the charge-discharge cycle test for the example and comparative examples in Table 4, and it is found that in the case of a charge-discharge cycle under such relatively severe conditions, the effect of suppressing an increase in resistance after the charge-discharge cycle with the use of the solid graphite as the negative active material is remarkably produced.

[Reference Examples 2 to 4]

(Fabrication of negative electrode)

Solid natural graphite as a negative active material, a styrene-butadiene rubber (SBR) as a binder, carboxymethyl cellulose (CMC) as a thickener, and water as a dispersion medium were used to prepare a negative composite paste. It is to be noted that the mass ratios of graphite, SBR, and CMC were set to be 98 : 1 : 1 (in terms of solid content). The negative composite paste was applied to a surface of a copper foil as a negative substrate, and dried. Thereafter, roll pressing was performed to obtain a negative electrode with the negative active material layer stacked on one surface of the negative substrate. It is to be noted that negative electrodes according to Reference Examples 2 to 4 were fabricated with the use of various types of solid natural graphite with the average particle sizes listed in Table 5.

[Evaluation]

(4-1) Peeling strength

For each of the fabricated negative electrodes according to Reference Examples 2 to 4, the peeling strength between the negative substrate and the negative active material layer was measured in accordance with JIS-Z-0237 (2009) in the following manner. After each of the negative electrodes was cut out into a size of 4.0 cm in length $\times$ 3.0 cm in width, the negative electrode was attached and then fixed to a measurement stand with a double-sided tape ("ST416-P" manufactured by 3M Company) with the negative substrate side facing downward. A peeling tape ("Scotch Mending Tape" manufactured by 3M Company) was attached to the surface of the negative active material layer on the side opposite to the fixed surface, and the peeling strength in the case of peeling off the negative active material layer at a peeling angle of 180 degrees and a tensile speed of 100 mm/min was measured with the use of a load measuring instrument ("Force Gauge ZTS-20N" manufactured by IMADA CO., LTD.). The measurement results are shown in Table 5.

[Table 5]

| | Negative active material | | Peeling strength (gf) |
|---|---|---|---|
| | Type | Average particle size ($\mu$m) | |
| Reference Example 2 | Solid natural graphite | 7.3 | 59.6 |
| Reference Example 3 | Solid natural graphite | 8.1 | 78.3 |
| Reference Example 4 | Solid natural graphite | 9.7 | 180.5 |

As shown in Table 5, the result was that the peeling strength was higher as the average particle size of the solid natural graphite was larger. From this result, an increase in resistance after a charge-discharge cycle is considered to have a tendency to be further suppressed with the use of the solid graphite with a larger average particle size.

INDUSTRIAL APPLICABILITY

The present invention can be applied to nonaqueous electrolyte energy storage devices and the like for use as power sources for electronic devices such as personal computers and communication terminals, and automobiles and the like.

DESCRIPTION OF REFERENCE SIGNS

1-: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

**Claims**

1. A nonaqueous electrolyte energy storage device comprising:

   a positive electrode including a lithium transition metal composite oxide containing a nickel element and a manganese element; and
   a negative electrode including solid graphite,
   wherein the solid graphite has a porosity of 2% or less, and
   a content of the nickel element with respect to the transition metal element in the lithium transition metal composite oxide is 40 mol% or more.

2. The nonaqueous electrolyte energy storage device according to claim 1 or 2, wherein a content of the manganese element with respect to the transition metal element in the lithium transition metal composite oxide is 30 mol% or less.

3. A nonaqueous electrolyte energy storage device comprising:

   a positive electrode including a lithium transition metal composite oxide containing a nickel element and a manganese element; and
   a negative electrode including solid graphite,
   wherein the solid graphite has a porosity of 2% or less, and
   a content of the manganese element with respect to the transition metal element in the lithium transition metal composite oxide is 30 mol% or less.

4. The nonaqueous electrolyte energy storage device according to claim 1 or 3, wherein the negative electrode further includes a binder, and the solid graphite has an average particle size of 4 $\mu$m or more.

5. The nonaqueous electrolyte energy storage device according to claim 1 or 3, wherein the solid graphite has an average particle size of 7 pm or more.

Fig. 1

Fig. 2

## INTERNATIONAL SEARCH REPORT

| International application No. |
|---|
| **PCT/JP2022/042462** |

**A. CLASSIFICATION OF SUBJECT MATTER**

*H01M 10/0525*(2010.01)i; *H01G 11/06*(2013.01)i; *H01G 11/24*(2013.01)i; *H01G 11/46*(2013.01)i; *H01M 4/505*(2010.01)i; *H01M 4/525*(2010.01)i; *H01M 4/587*(2010.01)i
FI:  H01M10/0525; H01G11/06; H01G11/24; H01G11/46; H01M4/505; H01M4/525; H01M4/587

According to International Patent Classification (IPC) or to both national classification and IPC

**B. FIELDS SEARCHED**

Minimum documentation searched (classification system followed by classification symbols)

H01M10/0525; H01G11/06; H01G11/24; H01G11/46; H01M4/505; H01M4/525; H01M4/587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/015194 A1 (GS YUASA INTERNATIONAL LTD.) 28 January 2021 (2021-01-28) paragraphs [0020], [0024]-[0028], [0089]-[0097], table 1 | 1-5 |
| X | WO 2020/144977 A1 (GS YUASA INTERNATIONAL LTD.) 16 July 2020 (2020-07-16) paragraphs [0021], [0025], [0095], [0117], table 12 | 1-3 |
| A | JP 2015-018663 A (TOYOTA INDUSTRIES CORP.) 29 January 2015 (2015-01-29) | 1-5 |
| A | WO 2021/108982 A1 (CONTEMPORARY AMPEREX TECHNOLOGY CO., LTD.) 10 June 2021 (2021-06-10) | 1-5 |
| A | JP 2014-082116 A (TOYOTA MOTOR CORP.) 08 May 2014 (2014-05-08) | 1-5 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **18 January 2023** | **31 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/042462**

| Patent document cited in search report | | | Publication date (day/month/year) | Patent family member(s) | | | Publication date (day/month/year) |
|---|---|---|---|---|---|---|---|
| WO | 2021/015194 | A1 | 28 January 2021 | US | 2022/0271287 | A1 | |
| | | | | paragraphs [0023], [0024], [0030]-[0048], [0125]-[0152], table 1 | | | |
| | | | | EP | 3975286 | A1 | |
| | | | | CN | 114144906 | A | |
| WO | 2020/144977 | A1 | 16 July 2020 | US | 2022/0085414 | A1 | |
| | | | | paragraphs [0022], [0026], [0109]-[0113], [0126], table 12 | | | |
| | | | | EP | 3890074 | A1 | |
| | | | | CN | 113302766 | A | |
| JP | 2015-018663 | A | 29 January 2015 | (Family: none) | | | |
| WO | 2021/108982 | A1 | 10 June 2021 | US | 2021/0399301 | A1 | |
| | | | | EP | 3923387 | A1 | |
| | | | | CN | 113207316 | A | |
| | | | | KR | 10-2022-0041903 | A | |
| | | | | JP | 2022-545912 | A | |
| JP | 2014-082116 | A | 08 May 2014 | US | 2015/0207134 | A1 | |
| | | | | WO | 2014/060814 | A1 | |
| | | | | EP | 2862219 | A2 | |
| | | | | CN | 104471749 | A | |

Form PCT/ISA/210 (patent family annex) (January 2015)

**EP 4 439 760 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015018678 A

- JP 2005222933 A